(19) Europäisches Patentamt

European Patent Office

Office européen des brevets

(11) **EP 4 745 100 A1**

(12) **EUROPEAN PATENT APPLICATION**
published in accordance with Art. 153(4) EPC

(43) Date of publication:
**20.05.2026 Bulletin 2026/21**

(21) Application number: **25834834.1**

(22) Date of filing: **02.09.2025**

(51) International Patent Classification (IPC):
*C03C 3/118* (2006.01)

(86) International application number:
**PCT/JP2025/030986**

(87) International publication number:
**WO 2026/074857 (09.04.2026 Gazette 2026/15)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH LA MA MD TN**

(30) Priority: **01.10.2024 JP 2024172781**

(71) Applicant: **Sumita Optical Glass, Inc.**
**Saitama-shi, Saitama 330-8565 (JP)**

(72) Inventor: **YAMAMOTO, Yoshinori**
**Saitama-shi, Saitama 330-8565 (JP)**

(74) Representative: **Scott, Stephen John**
**YUJA IP LAW**
**East Coast House**
**25 Skeldergate**
**York YO1 6DH (GB)**

(54) **UV-C TRANSMISSION GLASS AND GLASS COMPONENT**

(57)    Provided is a UV-C transmitting glass having good meltability, low thermal expansion, and excellent water resistance with a specific composition of alumino-borate glass. The UV-C transmitting glass contains, by mass%: not less than 46.90% and less than 55.00% of $SiO_2$; more than 27.00% and not more than 35.10% of $B_2O_3$; 6.90%-12.00% of $Al_2O_3$; 0.90%-8.00% of $Li_2O$; 0.90%-8.10% of $Na_2O$; 0%-5.10% of $K_2O$; not less than 4.00% and less than 9.00% of $R_2O$ (total of $Li_2O$, $Na_2O$, and $K_2O$); 0%-3.00% of MgO; 0%-3.00% of CaO; 0%-4.00% of SrO; 0%-4.00% of BaO; not less than 0% and less than 5.00% of R'O (total of MgO, CaO, SrO, and BaO); 0%-1.00% of $Sb_2O_3$; more than 0.01% and not more than 1.00% of F; and 0.05%-1.00% of Cl. A mass ratio expressed by $(R_2O + R'O)/(SiO_2 + B_2O_3 + Al_2O_3)$ is less than 0.1.

**EP 4 745 100 A1**

**Description**

TECHNICAL FIELD

The present disclosure relates to a UV-C transmitting glass and a glass component.

BACKGROUND

Low-pressure mercury lamps that emit ultraviolet radiation of 184.9 nm and 253.7 nm are conventionally used as light sources in sterilization applications. However, conclusion of the international treaty "Minamata Convention on Mercury" in 2013 has meant that with certain exceptions, the manufacture, import, and export of mercury-containing products has been banned since 2021. For this reason, there is increasing anticipation of the use of UV-C LEDs (deep ultraviolet LEDs), which have low impact on the human body and environment, as substitutes for low-pressure mercury lamps. The spread of COVID-19 has also heightened the need for immediate on-site disinfection of items touched by large numbers of people, and there is a rapidly expanding new market for UV-C LEDs that are easy to use and compact.

However, in contrast to mercury lamps having an output of the order of watts to tens of watts per lamp, UV-C LEDs have an output of the order of milliwatts to tens of milliwatts per element. Therefore, UV-C LEDs are still at the development stage with regards to output. With future increases of electrical/photovoltaic efficiency and the achievement of output exceeding 100 mW in UV-C LEDs, UV-C LEDs will have extremely strong sterilization action and become possible to incorporate into large UV-C devices where mercury lamps have been used up to the present.

Higher output of UV-C LEDs is accompanied by the need for durability of UV-C LED packages. Window members having the shape of a flat plate, a lens, or the like are used in UV-C LED packages. A window member having the shape of a lens is a member that protects a UV-C LED chip from external air and that also controls light emitted from the UV-C LED and causes efficient irradiation of UV-C.

Quartz glass having excellent UV-C transmission and durability has been considered suitable as a glass that is used for a window member of a UV-C LED package. However, the production of quartz glass requires melting of materials at 2000°C or higher. Moreover, the processing of quartz glass is machine processing through cutting and grinding from an ingot. Consequently, quartz glass presents problems in terms of producibility and processability.

On the other hand, aluminoborosilicate glass has a lower melting temperature than quartz glass, and there are aluminoborosilicate glasses having high transmittance over a wide wavelength range. Therefore, an aluminoborosilicate glass could be useful as a glass that is used in a UV-C LED package.

For example, Patent Literature (PTL) 1 to 4 disclose aluminoborosilicate glasses displaying transmission of ultraviolet radiation.

CITATION LIST

Patent Literature

PTL 1: JP H4-342437 A

PTL 2: JP 2018-197190 A

PTL 3: JP 2012-140314 A

PTL 4: JP 2013-230952 A

SUMMARY

(Technical Problem)

It is essential for a UV-C transmitting glass to have good meltability from a viewpoint of producibility. However, the glass disclosed in PTL 1 has poor meltability, and production of this glass may require melting of materials at a high temperature. Moreover, bubbles may remain inside of the glass because poor meltability leads to poor bubble removal. Also, the glass disclosed in PTL 2 particularly preferably contains 60 mass% to 68 mass% of $SiO_2$ as a main component, and this large amount of $SiO_2$ may result in poor meltability.

It is also essential for a UV-C transmitting glass to have low thermal expansion. For example, a ceramic such as aluminum nitride (AlN) or alumina ($Al_2O_3$) having high thermal conductivity is normally used as a casing material in a UV-C LED package. A large difference in thermal conductivity between the glass and the ceramic results in a large temperature difference between the glass and the ceramic casing in a situation in which the glass and the casing are heated to cause bonding thereof. Therefore, when the glass has high thermal expansion, strain may arise inside the glass and cause damage or defects. However, PTL 3 and 4 do not focus at all on thermal expansion.

It is also essential for a UV-C transmitting glass to have good water resistance since the UV-C transmitting glass is required to function as a sealing material for protecting a UV-C LED chip from moisture in external air. When water resistance of the glass is poor, there is a concern that the glass may react with water, clouding of the glass may occur, and UV-C transmission may deteriorate. However, PTL 2 and 4 do not focus at all on water resistance.

In light of the above, there is demand for satisfying all of the requirements of good meltability, low thermal expansion, and excellent water resistance with UV-C transmitting glass, particularly through optimization of composition.

Accordingly, the present disclosure was made in light of the circumstances set forth above and addresses a problem of providing a UV-C transmitting glass having good meltability, low thermal expansion, and excellent water resistance with a specific composition of aluminoborosilicate glass.

Moreover, the present disclosure also addresses a problem of providing a glass component in which the aforementioned UV-C transmitting glass is used.

(Solution to Problem)

As a result of diligent and extensive research conducted to achieve the objects described above, the inventor discovered that these objects can be achieved with a specific composition of aluminoborosilicate glass, thereby leading to completion of the present disclosure.

Primary configurations of the present disclosure for solving the problems described above are as set forth below.

[1] A UV-C transmitting glass comprising, by mass%:

not less than 46.90% and less than 55.00% of $SiO_2$;
more than 27.00% and not more than 35.10% of $B_2O_3$;
not less than 6.90% and not more than 12.00% of $Al_2O_3$;
not less than 0.90% and not more than 8.00% of $Li_2O$;
not less than 0.90% and not more than 8.10% of $Na_2O$;
not less than 0% and not more than 5.10% of $K_2O$;
not less than 4.00% and less than 9.00% of $R_2O$, where $R_2O$ indicates a total of $Li_2O$, $Na_2O$, and $K_2O$;
not less than 0% and not more than 3.00% of MgO;
not less than 0% and not more than 3.00% of CaO;
not less than 0% and not more than 4.00% of SrO;
not less than 0% and not more than 4.00% of BaO;
not less than 0% and less than 5.00% of R'O, where R'O indicates a total of MgO, CaO, SrO, and BaO;
not less than 0% and not more than 1.00% of $Sb_2O_3$;
more than 0.01% and not more than 1.00% of F; and
not less than 0.05% and not more than 1.00% of Cl, wherein
a mass ratio expressed by $(R_2O + R'O)/(SiO_2 + B_2O_3 + Al_2O_3)$ is less than 0.1.

[2] The UV-C transmitting glass according to [1], having an average linear expansion coefficient ($\alpha_{100\text{-}300°C}$) of not less than $45 \times 10^{-7}/°C$ and not more than $60 \times 10^{-7}/°C$.

[3] The UV-C transmitting glass according to [1] or [2], having an internal transmittance of 90% or more at a wavelength of 265 nm with a glass thickness of 1 mm.

[4] The UV-C transmitting glass according to any one of [1] to [3], having a glass-transition point of 510°C or lower.

[5] The UV-C transmitting glass according to any one of [1] to [4], wherein in a situation in which a 20 mm $\times$ 10 mm $\times$ 10 mm glass piece of the UV-C transmitting glass is subjected to 60 minutes of boiling treatment in 1,000 mL of pure water, weight loss between before and after the boiling treatment is less than 0.1 mass%.

[6] The UV-C transmitting glass according to any one of [1] to [5], wherein the UV-C transmitting glass is for precision press molding.

[7] A glass component obtained using the UV-C transmitting glass according to any one of [1] to [6] as a material.

(Advantageous Effect)

According to the present disclosure, it is possible to provide a UV-C transmitting glass having good meltability, low thermal expansion, and excellent water resistance with a specific composition of aluminoborosilicate glass.

Moreover, according to the present disclosure, it is possible to provide a glass component in which the aforementioned UV-C transmitting glass is used.

DETAILED DESCRIPTION

(UV-C transmitting glass)

The following provides a specific description of a UV-C transmitting glass of one embodiment of the present disclosure (hereinafter, also referred to as the "glass of the present embodiment").

As one feature, the glass of the present embodiment contains (composition requirement), by mass%:

not less than 46.90% and less than 55.00% of $SiO_2$;
more than 27.00% and not more than 35.10% of $B_2O_3$;
not less than 6.90% and not more than 12.00% of $Al_2O_3$;
not less than 0.90% and not more than 8.00% of $Li_2O$;
not less than 0.90% and not more than 8.10% of $Na_2O$;
not less than 0% and not more than 5.10% of $K_2O$;
not less than 4.00% and less than 9.00% of $R_2O$, where $R_2O$ indicates a total of $Li_2O$, $Na_2O$, and $K_2O$;
not less than 0% and not more than 3.00% of MgO;
not less than 0% and not more than 3.00% of CaO;
not less than 0% and not more than 4.00% of SrO;
not less than 0% and not more than 4.00% of BaO;
not less than 0% and less than 5.00% of R'O, where R'O indicates a total of MgO, CaO, SrO, and BaO;
not less than 0% and not more than 1.00% of $Sb_2O_3$;
more than 0.01% and not more than 1.00% of F; and
not less than 0.05% and not more than 1.00% of Cl.

Moreover, as one feature, the glass of the present embodiment has a mass ratio expressed by $(R_2O + R'O)/(SiO_2 + B_2O_3 + Al_2O_3)$ of less than 0.1. The glass of the present embodiment was discovered through repeated experimentation by the inventor, and by satisfying the composition requirement set forth above while also setting the mass ratio expressed by $(R_2O + R'O)/(SiO_2 + B_2O_3 + Al_2O_3)$ as less than 0.1, it is possible to provide a UV-C transmitting glass having good meltability, low thermal expansion, and excellent water resistance with a specific composition of aluminoborosilicate glass.

Reasons for limiting the ranges of components in the composition requirement are as follows. Note that "%" used in relation to a component means "mass%" unless otherwise specified.

<$SiO_2$>

$SiO_2$ is an essential component in the glass of the present embodiment and is a main component forming a network structure of the glass. $SiO_2$ is a component that can reduce thermal expansion and increase water resistance. Moreover, $SiO_2$ is a component that can increase stability against devitrification. However, when the content of $SiO_2$ is 55.00% or more, the viscosity of molten glass may increase, and meltability may noticeably decrease. On the other hand, when the content of $SiO_2$ is less than 46.90%, the effect of lowering thermal expansion and the effect of increasing water resistance may not be adequately obtained. Moreover, the effect of increasing stability against devitrification may not be adequately obtained. Therefore, the content of $SiO_2$ in the glass of the present embodiment is set as a range of not less than 46.90% and less than 55.00%. From a similar viewpoint, the content of $SiO_2$ in the glass of the present embodiment is preferably 47.00% or more, and is preferably 54.90% or less.

<$B_2O_3$>

In the optical glass of the present embodiment, $B_2O_3$ is a component that forms a network structure of the glass in the same manner as $SiO_2$. $B_2O_3$ is a component that can lower the viscosity of molten glass and improve meltability without changing thermal expansion of the glass. Moreover, $B_2O_3$ is a component that can increase stability against devitrification. However, when the content of $B_2O_3$ is more than 35.10%, water resistance may deteriorate. On the other hand, when the content of $B_2O_3$ is 27.00% or less, the viscosity of molten glass may increase, and the effect of improving meltability may not be adequately obtained. Therefore, the content of $B_2O_3$ in the glass of the present embodiment is set as a range of more than 27.00% and not more than 35.10%. From a similar viewpoint, the content of $B_2O_3$ in the glass of the present embodiment is preferably 27.50% or more, and is preferably 35.05% or less.

<Al$_2$O$_3$>

In the glass of the present embodiment, Al$_2$O$_3$ is a component that can lower thermal expansion of the glass and that can increase water resistance of the glass. Moreover, Al$_2$O$_3$ is a component that can inhibit phase separation of the glass and that can increase stability against devitrification. However, when the content of Al$_2$O$_3$ is more than 12.00%, meltability of the glass may deteriorate. On the other hand, when the content of Al$_2$O$_3$ is less than 6.90%, thermal expansion of the glass may decrease, and the effect of increasing water resistance of the glass may not be adequately obtainable. Moreover, when the content of Al$_2$O$_3$ is less than 6.90%, it may not be possible to inhibit phase separation of the glass, and stability against devitrification may noticeably decrease. Therefore, the content of Al$_2$O$_3$ in the glass of the present embodiment is set as a range of not less than 6.90% and not more than 12.00%. From a similar viewpoint, the content of Al$_2$O$_3$ in the glass of the present embodiment is preferably 7.00% or more, and is preferably 11.80% or less.

<Li$_2$O>

In the glass of the present embodiment, Li$_2$O is a component that lowers the viscosity of molten glass and improves meltability to the greatest extent among alkali metal oxides. However, when the content of Li$_2$O is more than 8.00%, thermal expansion of the glass may increase. On the other hand, when the content of Li$_2$O is less than 0.90%, the effect of lowering the viscosity of molten glass and improving meltability may not be adequately obtained. Therefore, the content of Li$_2$O in the glass of the present embodiment is set as a range of not less than 0.90% and not more than 8.00%. From a similar viewpoint, the content of Li$_2$O in the glass of the present embodiment is preferably 1.00% or more, and is preferably 7.80% or less.

<Na$_2$O>

In the glass of the present embodiment, Na$_2$O is a component that lowers the viscosity of molten glass and improves meltability, but to a lesser extent than Li$_2$O. However, when the content of Na$_2$O is more than 8.10%, thermal expansion may increase, and water resistance may noticeably deteriorate. On the other hand, when the content of Na$_2$O is less than 0.90%, the effect of lowering the viscosity of molten glass and improving meltability may not be adequately obtained. Therefore, the content of Na$_2$O in the glass of the present embodiment is set as a range of not less than 0.90% and not more than 8.10%. From a similar viewpoint, the content of Na$_2$O in the glass of the present embodiment is preferably 1.00% or more, and is preferably 8.00% or less.

<K$_2$O>

In the glass of the present embodiment, K$_2$O is a component that lowers the viscosity of molten glass and improves meltability, but to a lesser extent than Li$_2$O and Na$_2$O. However, when the content of K$_2$O is more than 5.10%, thermal expansion may increase. Therefore, the content of K$_2$O in the glass of the present embodiment is set as a range of not less than 0% and not more than 5.10%. From a similar viewpoint, the content of K$_2$O in the glass of the present embodiment is preferably 5.00% or less.

<R$_2$O>

R$_2$O indicates the total of Li$_2$O, Na$_2$O, and K$_2$O. The content of R$_2$O in the glass of the present embodiment is not less than 4.00% and less than 9.00%. When the content of R$_2$O is 9.00% or more, thermal expansion of the glass may increase. On the other hand, when the content of R$_2$O is less than 4.00%, the effect of lowering the viscosity of molten glass and improving meltability may not be adequately obtained. From a similar viewpoint, the content of R$_2$O in the glass of the present embodiment is preferably 4.50% or more, and is preferably 8.97% or less.

<MgO>

In the glass of the present embodiment, MgO is a component that can increase durability of the glass. However, when the content of MgO is more than 3.00%, meltability of the glass may deteriorate. Therefore, the content of MgO in the glass of the present embodiment is set as a range of not less than 0% and not more than 3.00%. From a similar viewpoint, the content of MgO in the glass of the present embodiment is preferably 2.50% or less.

<CaO>

In the glass of the present embodiment, CaO is a component that can increase durability of the glass. However, when the content of CaO is more than 3.00%, meltability of the glass may deteriorate. Therefore, the content of CaO in the glass of the present embodiment is set as a range of not less than 0% and not more than 3.00%. From a similar viewpoint, the content of CaO in the optical glass of the present embodiment is preferably 2.50% or less.

<SrO>

In the optical glass of the present embodiment, SrO is a component that can increase stability against devitrification of the glass and that can also increase durability of the glass. However, when the content of SrO is more than 4.00%, meltability of the glass may deteriorate. Therefore, the content of SrO in the glass of the present embodiment is set as a range of not less than 0% and not more than 4.00%. From a similar viewpoint, the content of SrO in the optical glass of the present embodiment is preferably 3.50% or less.

<BaO>

In the glass of the present embodiment, BaO is a component that can increase stability against devitrification of the glass and that can also increase durability of the glass. However, when the content of BaO is more than 4.00%, meltability of the glass may deteriorate. Therefore, the content of BaO in the glass of the present embodiment is set as a range of not less than 0% and not more than 4.00%. From a similar viewpoint, the content of BaO in the optical glass of the present embodiment is preferably 3.50% or less.

<R'O>

R'O indicates the total of MgO, CaO, SrO, and BaO. The content of R'O in the glass of the present embodiment is not less than 0% and less than 5.00%. When the content of R'O is more than 5.00%, meltability of the glass may deteriorate. Note that the content of R'O in the optical glass of the present embodiment is preferably 4.50% or less from a viewpoint of further increasing durability and devitrification resistance of the glass.

<$Sb_2O_3$>

In the glass of the present embodiment, $Sb_2O_3$ is a component that can remove bubbles from molten glass and is a component that can optionally be added. The effect of removing bubbles from molten glass can be adequately obtained when the content of $Sb_2O_3$ is 1.00% or less. Therefore, the content of $Sb_2O_3$ in the glass of the present embodiment is set as a range of not less than 0% and not more than 1.00%.

<F>

In the glass of the present embodiment, F is a refining agent. The inclusion of a trace amount (for example, more than 0.01%) of F in the glass promotes bubble removal and refining. On the other hand, when the content of F is more than 1.00%, harmful volatile matter of fluorine may arise and may remain as bubbles in the glass. Therefore, the content of F in the glass of the present embodiment is set as a range of more than 0.01% and not more than 1.00%.
The inclusion of F in the glass can be achieved by using a fluoride such as KF, LiF, NaF, $MgF_2$, $CaF_2$, $SrF_2$, $BaF_2$, or $AlF_3$ as a material.

<Cl>

In the glass of the present embodiment, Cl is a refining agent. The addition of 0.05% or more of Cl to the glass causes small air bubbles to expand and rise and promotes refining. However, when the content of Cl is more than 1.00%, UV transmission may decrease. Therefore, the content of Cl in the glass of the present embodiment is set as a range of not less than 0.05% and not more than 1.00%.
The inclusion of Cl in the glass can be achieved by using a chloride such as KCl, LiCl, NaCl, $AlCl_3$, $MgCl_2$, $CaCl_2$, $SrCl_2$, or $BaCl_2$ as a material.

<Mass ratio expressed by $(R_2O + R'O)/(SiO_2 + B_2O_3 + Al_2O_3)$>

The glass of the present embodiment is required to have a mass ratio expressed by $(R_2O + R'O)/(SiO_2 + B_2O_3 + Al_2O_3)$ of less than 0.1. Satisfaction of the composition requirement set forth above may, by itself, not enable a balance of both low thermal expansion and excellent water resistance. The glass of the present embodiment makes it possible to reliably reduce thermal expansion through adjustment of the content of components ($R_2O$ and R'O) that increase thermal expansion and the content of components ($SiO_2$, $B_2O_3$, and $Al_2O_3$) that lower thermal expansion or do not affect thermal expansion; in other words, through setting of the mass ratio expressed by ($R_2O$ + R'O)/($SiO_2$ + $B_2O_3$ + $Al_2O_3$) as less than 0.1. Accordingly, the present disclosure makes it possible to provide a UV-C transmitting glass having good meltability, low thermal expansion, and excellent water resistance by satisfying the composition requirement set forth above while also having a mass ratio expressed by ($R_2O$ + R'O)/($SiO_2$ + $B_2O_3$ + $Al_2O_3$) of less than 0.1.

<$Fe_2O_3$>

$Fe_2O_3$ is a component that may absorb UV-C and result in poorer UV-C transmission. However, since it is extremely difficult to completely avoid inclusion of $Fe_2O_3$ from materials and a production process of the glass, the glass normally unavoidably contains $Fe_2O_3$. Therefore, the glass of the present embodiment preferably has a low content of $Fe_2O_3$. Specifically, the content of $Fe_2O_3$ in the glass of the present embodiment is preferably 0.01% or less, 0.005% or less, or 0.0005% or less. On the other hand, the content of $Fe_2O_3$ in the glass of the present embodiment is preferably 0.00001% or more, or 0.0001% or more from a viewpoint of producibility of the glass.

<$TiO_2$>

$TiO_2$ is a component that may absorb UV-C and result in poorer UV-C transmission in the same manner as $Fe_2O_3$. However, since it is extremely difficult to completely avoid inclusion of $TiO_2$ from materials and a production process of the glass, the glass normally unavoidably contains $TiO_2$. Therefore, the glass of the present embodiment preferably has a low content of $TiO_2$. Specifically, the content of $TiO_2$ in the glass of the present embodiment is preferably 0.02% or less, 0.015% or less, or 0.01% or less. On the other hand, the content of $TiO_2$ in the glass of the present embodiment is preferably 0.0001% or more, or 0.0003% or more from a viewpoint of producibility of the glass.

<Other components>

The glass of the present embodiment can contain other components besides the components described above ($SiO_2$, $B_2O_3$, $Al_2O_3$, $Li_2O$, $Na_2O$, $K_2O$, MgO, CaO, SrO, BaO, $Sb_2O_3$, F, Cl, $Fe_2O_3$, and $TiO_2$) so long as this does not result in deviation from the object. Examples of such other components include $Gd_2O$, $Y_2O_3$, $La_2O_3$, $ZrO_2$, $GeO_2$, $Ta_2O_5$, and $P_2O_5$. However, from a viewpoint of more reliably causing expression of desired characteristics, the content of these other components in the glass of the present embodiment is preferably 5% or less, more preferably 3% or less, and even more preferably 1% or less, and it is particularly preferable that the glass of the present embodiment has a composition composed of only the components described above.
Note that the phrase "composed of only the components described above" encompasses cases in which impurity components other than the components described above are not substantially included, and more specifically encompasses cases in which the content of other components is 0.2% or less.
$Cr_2O_3$, NiO, CuO, $CeO_2$, $V_2O_5$, $WO_3$, $MoO_3$, $MnO_2$, and CoO are components that may absorb UV-C and result in poorer UV-C transmission. Therefore, the glass of the present embodiment preferably does not substantially contain these components.
Next, various characteristics of the glass of the present embodiment are described.

<Meltability>

The term "meltability" as used in the present specification refers to a phenomenon where heating of a homogeneously mixed batch to a melting temperature causes a vitrification reaction to proceed and the batch to change to a completely molten state without unmelted matter remaining. The glass of the present embodiment has good meltability, and thus has a low melting temperature and low tendency for unmelted matter and/or bubbles to remain in a melt. The glass of the present embodiment makes it possible to obtain a homogeneous glass that is free of unmelted matter and/or bubbles by, for example, heating a batch of the glass of the present embodiment at a melting temperature of 1450°C in an electric furnace for 3 hours.

<Thermal expansion>

Thermal expansion can be evaluated by measuring an average linear expansion coefficient ($\alpha_{100\text{-}300°C}$). The average linear expansion coefficient is a physical value for the proportion by which the length of an object changes, relative to temperature, as the temperature rises and is also referred to as the thermal expansion coefficient.
The glass of the present embodiment has low thermal expansion, and thus has a low tendency for strain to arise in the glass and is not susceptible to thermal cracking when part of the glass is heated and a temperature difference arises in the glass. From a viewpoint of further reducing thermal expansion of the glass, the glass of the present embodiment preferably has an average linear expansion coefficient ($\alpha_{100\text{-}300°C}$) of $60 \times 10^{-7}/°C$ or less. From a similar viewpoint, the glass of the present embodiment more preferably has an average linear expansion coefficient ($\alpha_{100\text{-}300°C}$) of $59 \times 10^{-7}/°C$ or less. Moreover, the average linear expansion coefficient ($\alpha_{100\text{-}300°C}$) of the glass of the present embodiment is preferably $45 \times 10^{-7}/°C$ or more, and more preferably $46 \times 10^{-7}/°C$ or more.

Note that the "average linear expansion coefficient ($\alpha_{100\text{-}300°C}$)" described above indicates a value measured in accordance with JOGIS 08-2019 "Measuring method for thermal expansion of optical glass" of Japan Optical Glass Industry Standards. Moreover, adjustment of the "average linear expansion coefficient ($\alpha_{100\text{-}300°C}$)" of the glass of the present embodiment can be performed by, for example, appropriately adjusting the contents of the above-described components within specific ranges while also setting the mass ratio expressed by $(R_2O + R'O)/(SiO_2 + B_2O_3 + Al_2O_3)$ as less than 0.1.

<UV-C transmission>

The glass of the present embodiment displays UV-C transmission. UV-C transmission can be evaluated by measuring internal transmittance at a wavelength of 265 nm with a glass thickness of 1 mm. Specifically, the internal transmittance of the glass of the present embodiment at a wavelength of 265 nm with a glass thickness of 1 mm can be 90% or more, or can be 91% or more.

Note that the "internal transmittance" described above is determined in accordance with a calculation formula in JOGIS 17-2019 "Measuring method for internal transmittance of optical glass" of Japan Optical Glass Industry Standards. Moreover, adjustment of the "internal transmittance" of the glass of the present embodiment can be performed by, for example, appropriately adjusting the contents of the above-described components within specific ranges.

<Glass-transition point>

The glass of the present embodiment preferably has a glass-transition point of 510°C or lower. The glass-transition point is a temperature that indicates a process of changing from a melt to a glass and is a temperature that serves as an index for judging whether or not molding is possible. As the glass-transition point increases, the molding temperature also increases, and problems such as glass becoming stuck to a used mold such that it cannot be demolded may arise. Therefore, the glass-transition point is preferably as low as possible, and the glass-transition point of the glass of the present embodiment is more preferably 500°C or lower, and even more preferably 490°C or lower.

Note that the "glass-transition point" described above indicates a temperature corresponding to an intersection point of two tangents drawn from a low temperature side and a high temperature side of a bend of a thermal expansion curve that is measured in accordance with JOGIS 08-2019 "Measuring method for thermal expansion of optical glass" of Japan Optical Glass Industry Standards. Moreover, adjustment of the "glass-transition point" of the glass of the present embodiment can be performed by, for example, appropriately adjusting the contents of the above-described components within specific ranges.

<Water resistance>

Water resistance can be evaluated by calculating weight loss. The "weight loss" of glass referred to in the present specification means the weight loss (mass%) of a glass piece between before and after boiling treatment in a situation in which a 20 mm $\times$ 10 mm $\times$ 10 mm glass piece is subjected to 60 minutes of boiling treatment in 1,000 mL of pure water. The weight loss is calculated by the following formula.

Weight loss = (Mass of glass piece before boiling treatment - Mass of glass piece after boiling treatment) $\times$ 100/Mass of glass piece before boiling treatment

The glass of the present embodiment has excellent water resistance. For example, the glass of the present embodiment preferably has a weight loss of less than 0.1 mass%.

Adjustment of "weight loss" of the glass of the present embodiment can be performed by, for example, appropriately adjusting the contents of the above-described components within specific ranges.

(Production method of UV-C transmitting glass)

Next, the production method of the glass of the present embodiment is described.

No specific limitations are placed on the production method of the glass of the present embodiment so long as the composition of components (contents and mass ratio) satisfies the ranges set forth above, and the glass of the present embodiment can be produced according to a conventional production method.

For example, oxides, hydroxides, carbonates, nitrates, fluorides, chlorides, etc. are first weighed out in specific proportions as materials for components that can be contained in the optical glass of the present embodiment and are thoroughly mixed to obtain a glass batch. Next, this glass batch is loaded into a melting vessel (for example, a crucible of a platinum group metal, an alloy of a platinum group metal, quartz, or the like) that is not reactive with the glass batch, is heated and melted at 1300°C to 1450°C in an electric furnace, and is stirred in a timely manner. Next, after refining and homogenization in the electric furnace, the glass batch is cast into a mold that has been preheated to an appropriate temperature and is then slowly cooled inside of the electric furnace to relieve strain and thereby enable production of the glass of the present embodiment.

(Application of UV-C transmitting glass)

Although no specific limitations are placed on the application of the glass of the present embodiment, the glass of the present embodiment is preferably for precision press molding.

Since the glass of the present embodiment is also advantageous in molding, it is easy to produce the subsequently described glass component by subjecting the glass of the present embodiment to precision press molding.

(Glass component)

The following describes a glass component of one embodiment of the present disclosure (hereinafter, also referred to as the "glass component of the present embodiment").

A feature of the glass component of the present embodiment is that the UV-C transmitting glass set forth above is used as a material of the glass component. The glass component of the present embodiment has low thermal expansion and excellent water resistance as a result of the UV-C transmitting glass set forth above being used as a material thereof.

The glass component of the present embodiment may be an LED cover lens, a lens array such as a microlens array, a prism with lens functionality, a material for a preform, a material for fiber, or the like, but is not specifically limited thereto. In a case in which the glass component includes a lens, the lens may be a spherical lens, an aspheric lens, a plano-concave lens, a plano-convex lens, a double concave lens, a double convex lens, a concave meniscus lens, a convex meniscus lens, a microlens, a lens with a diffraction grating, a rod lens, or the like. An anti-reflection film, a partially reflecting film having wavelength selectivity, or the like may be provided at the surface of the lens as necessary.

The production method of the glass component of the present embodiment can be a commonly known method selected as appropriate depending on the object without any specific limitations. For example, a method that involves precision press molding the glass of the present embodiment may be adopted.

EXAMPLES

The following provides a more specific description of the present disclosure through examples and comparative examples. However, the present disclosure is not limited to these examples.

Production of glasses in the examples and comparative examples was performed by the following method.

Oxides, hydroxides, carbonates, nitrates, fluorides, chlorides, etc. corresponding to components in each composition recorded in Tables 1 to 8 were used as materials for those components, were weighed out such as to constitute specific proportions, and were thoroughly mixed to obtain a batch. Next, the batch was loaded into a crucible made of platinum and was melted at a temperature of 1300°C to 1450°C in an electric furnace for several hours while stirring the batch in a timely manner using a stirring rod made of platinum so as promote homogenization and cause refining. Thereafter, the batch was cast into a mold that had been preheated to an appropriate temperature and was then slowly cooled inside of the electric furnace to obtain a glass of each example or comparative example. In the examples and comparative examples, $AlF_3$ was used as a fluoride, and NaCl was used as a chloride. Moreover, the glasses of the examples and comparative examples each had an $Fe_2O_3$ content of 0.01 mass% or less and a $TiO_2$ content of 0.02 mass% or less.

Note that Comparative Examples 1 and 2 are examples corresponding to the compositions of Examples 1 and 4 described in PTL 1 (JP H4-342437 A), and Comparative Example 3 is an example corresponding to Example 1 of PTL 2 (JP 2018-197190 A). Comparative Examples 4, 5, and 6 are examples corresponding to samples No. 1, No. 8, and No. 11 in PTL 3 (JP 2012-140314 A). Moreover, Comparative Example 7 is an example corresponding to Example 1 of PTL 4 (JP 2013-230952 A).

The obtained glass of each example or comparative example was subjected to evaluation of meltability, thermal expansion, water resistance, and UV-C transmission and measurement of glass-transition point according to the following procedures. The results are shown in Tables 1 to 7.

<Evaluation of meltability>

Meltability was evaluated by heating the batch at a temperature of 1450°C in an electric furnace for 3 hours and subsequently giving a visual evaluation of "A" in a case in which unmelted matter and bubbles were not observed and "B" in a case in which unmelted matter or bubbles were observed.

<Evaluation of thermal expansion>

Thermal expansion was evaluated by measuring an average linear expansion coefficient ($\alpha_{100-300°C}$). Specifically, measurement of the average linear expansion coefficient ($\alpha_{100-300°C}$) was performed according to a method described in JOGIS 08-2019 "Measuring method for thermal expansion of optical glass" of Japan Optical Glass Industry Standards. A smaller value for this average linear expansion coefficient ($\alpha_{100-300°C}$) indicates lower (better) thermal expansion.

<Evaluation of water resistance>

Water resistance was evaluated by calculating weight loss. Specifically, calculation of weight loss was performed by the following method.
A 20 mm × 10 mm × 10 mm glass piece of the glass of each example or comparative example was subjected to 60 minutes of boiling treatment in 1,000 mL of pure water. Thereafter, weight loss was calculated by the following formula. A smaller value for this weight loss indicates better water resistance.

Weight loss = (Mass of glass piece before boiling treatment - Mass of glass piece after boiling treatment) × 100/Mass of glass piece before boiling treatment

<Measurement of glass-transition point>

Measurement of a glass-transition point was performed according to a method described in JOGIS 08-2019 "Measuring method for thermal expansion of optical glass" of Japan Optical Glass Industry Standards. A lower glass-transition point indicates better moldability.

<Evaluation of UV-C transmission>

UV-C transmission was evaluated by measuring internal transmittance at a wavelength of 265 nm with a glass thickness of 1 mm. Specifically, calculation of internal transmittance at a wavelength of 265 nm with a glass thickness of 1 mm was performed according to a method described in JOGIS 17-2019 "Measuring method for internal transmittance of optical glass" of Japan Optical Glass Industry Standards. A larger value for this internal transmittance indicates better UV-C transmission.
[Table 1]

| Table 1 | Example 1 | Example 2 | Example 3 | Example 4 | Example 5 | Example 6 | Example 7 |
|---|---|---|---|---|---|---|---|
| $SiO_2$ [mass%] | 47.81 | 49.75 | 51.84 | 53.68 | 51.69 | 50.85 | 54.84 |
| $B_2O_3$ [mass%] | 33.86 | 31.84 | 29.91 | 27.83 | 32.31 | 30.91 | 28.91 |
| $Al_2O_3$ [mass%] | 8.98 | 8.97 | 8.99 | 8.96 | 8.96 | 8.99 | 7.00 |
| $Li_2O$ [mass%] | 2.99 | 2.99 | 2.99 | 2.98 | 2.98 | 2.99 | 2.99 |
| $Na_2O$ [mass%] | 2.98 | 3.08 | 2.89 | 2.88 | 2.68 | 2.39 | 2.89 |
| $K_2O$ [mass%] | | | | | | 1.00 | |
| MgO [mass%] | | | | | | | |
| CaO [mass%] | | | | | 0.99 | | |
| SrO [mass%] | | | | | | | |
| BaO [mass%] | 2.99 | 2.99 | 2.99 | 2.98 | | 2.49 | 2.99 |

(continued)

| Table 1 | Example 1 | Example 2 | Example 3 | Example 4 | Example 5 | Example 6 | Example 7 |
|---|---|---|---|---|---|---|---|
| $Sb_2O_3$ [mass%] | 0.05 | 0.05 | 0.05 | 0.05 | 0.05 | 0.05 | 0.05 |
| F [mass%] | 0.03 | 0.03 | 0.03 | 0.03 | 0.03 | 0.03 | 0.03 |
| Cl [mass%] | 0.30 | 0.30 | 0.30 | 0.60 | 0.30 | 0.30 | 0.30 |
| Total [mass%] | 100.00 | 100.00 | 100.00 | 100.00 | 100.00 | 100.00 | 100.00 |
| $R_2O$ (= $Li_2O$ + $Na_2O$ + $K_2O$) [mass%] | 5.97 | 6.07 | 5.88 | 5.86 | 5.66 | 6.38 | 5.88 |
| R'O (= MgO + CaO + SrO + BaO) [mass%] | 2.99 | 2.99 | 2.99 | 2.98 | 0.99 | 2.49 | 2.99 |
| ($R_2O$ + R'O)/($SiO_2$ + $B_2O_3$ + $Al_2O_3$) | 0.0988 | 0.0999 | 0.0977 | 0.0977 | 0.0716 | 0.0977 | 0.0977 |
| Meltability | A | A | A | A | A | A | A |
| Glass-transition point [°C] | 459 | 476 | 485 | 484 | 479 | 482 | 492 |
| Average linear expansion coefficient ($\alpha_{100\text{-}300°C}$) [$\times 10^{-7}$/°C] | 52 | 55 | 53 | 52 | 49 | 49 | 48 |
| Internal transmittance at wavelength of 265 nm with glass thickness of 1 mm [%] | 93.1 | 92.8 | 92.5 | 91.5 | 92.1 | 92.3 | 92.4 |
| Weight loss [mass%] | 0.099 | 0.075 | 0.044 | 0.037 | 0.075 | 0.058 | 0.098 |

[Table 2]

| Table 2 | Example 8 | Example 9 | Example 10 | Example 11 | Example 12 | Example 13 | Example 14 |
|---|---|---|---|---|---|---|---|
| $SiO_2$ [mass%] | 47.01 | 51.79 | 47.03 | 49.95 | 49.80 | 49.80 | 51.79 |
| $B_2O_3$ [mass%] | 31.87 | 29.88 | 35.02 | 31.96 | 31.87 | 33.86 | 29.88 |
| $Al_2O_3$ [mass%] | 11.77 | 8.98 | 8.81 | 9.01 | 8.98 | 8.98 | 8.98 |
| $Li_2O$ [mass%] | 2.99 | 1.00 | 1.01 | 7.69 | 1.99 | 2.29 | 2.99 |
| $Na_2O$ [mass%] | 2.98 | 7.97 | 7.75 | 1.01 | 1.00 | 2.29 | 2.98 |
| $K_2O$ [mass%] | | | | | 4.98 | | 2.99 |
| MgO [mass%] | | | | | | | |
| CaO [mass%] | | | | | | | |
| SrO [mass%] | | | | | | | |
| BaO [mass%] | 2.99 | | | | 1.00 | 2.39 | |
| $Sb_2O_3$ [mass%] | 0.05 | 0.05 | 0.05 | 0.05 | 0.05 | 0.05 | 0.05 |
| F [mass%] | 0.03 | 0.03 | 0.03 | 0.03 | 0.03 | 0.03 | 0.03 |
| Cl [mass%] | 0.30 | 0.30 | 0.30 | 0.30 | 0.30 | 0.30 | 0.30 |
| Total [mass%] | 100.00 | 100.00 | 100.00 | 100.00 | 100.00 | 100.00 | 100.00 |
| $R_2O$ (= $Li_2O$ + $Na_2O$ + $K_2O$) [mass%] | 5.97 | 8.97 | 8.76 | 8.70 | 7.97 | 4.58 | 8.96 |

(continued)

| Table 2 | Example 8 | Example 9 | Example 10 | Example 11 | Example 12 | Example 13 | Example 14 |
|---|---|---|---|---|---|---|---|
| R'O (= MgO + CaO + SrO + BaO) [mass%] | 2.99 | | | | 1.00 | 2.39 | |
| $(R_2O + R'O)/(SiO_2 + B_2O_3 + Al_2O_3)$ | 0.0989 | 0.0989 | 0.0964 | 0.0957 | 0.0990 | 0.0752 | 0.0988 |
| Meltability | A | A | A | A | A | A | A |
| Glass-transition point [°C] | 482 | 471 | 457 | 505 | 460 | 464 | 470 |
| Average linear expansion coefficient ($\alpha_{100-300°C}$) [$\times 10^{-7}$/°C] | 55 | 57 | 60 | 60 | 55 | 49 | 56 |
| Internal transmittance at wavelength of 265 nm with glass thickness of 1 mm [%] | 90.2 | 92.8 | 93.2 | 91.8 | 92.4 | 92.2 | 92.7 |
| Weight loss [mass%] | 0.052 | 0.042 | 0.099 | 0.066 | 0.059 | 0.058 | 0.062 |

[Table 3]

| Table 3 | Example 15 | Example 16 | Example 17 | Example 18 | Example 19 | Example 20 |
|---|---|---|---|---|---|---|
| $SiO_2$ [mass%] | 51.84 | 51.84 | 49.80 | 49.80 | 49.80 | 49.80 |
| $B_2O_3$ [mass%] | 30.91 | 30.91 | 31.87 | 31.87 | 31.87 | 31.87 |
| $Al_2O_3$ [mass%] | 8.99 | 8.99 | 8.98 | 8.98 | 8.98 | 8.98 |
| $Li_2O$ [mass%] | 2.99 | 2.99 | 2.99 | 2.99 | 2.49 | 2.49 |
| $Na_2O$ [mass%] | 2.89 | 2.89 | 3.48 | 3.48 | 2.98 | 2.98 |
| $K_2O$ [mass%] | | | | | | |
| MgO [mass%] | 1.00 | | 2.49 | | | |
| CaO [mass%] | | | | 2.49 | | |
| SrO [mass%] | | 1.00 | | | 3.49 | |
| BaO [mass%] | 1.00 | 1.00 | | | | 3.49 |
| $Sb_2O_3$ [mass%] | 0.05 | 0.05 | 0.05 | 0.05 | 0.05 | 0.05 |
| F [mass%] | 0.03 | 0.03 | 0.03 | 0.03 | 0.03 | 0.03 |
| Cl [mass%] | 0.30 | 0.30 | 0.30 | 0.30 | 0.30 | 0.30 |
| Total [mass%] | 100.00 | 100.00 | 100.00 | 100.00 | 100.00 | 100.00 |
| $R_2O$ (= $Li_2O$ + $Na_2O$ + $K_2O$) [mass%] | 5.88 | 5.88 | 6.47 | 6.47 | 5.47 | 5.47 |
| R'O (= MgO + CaO + SrO + BaO) [mass%] | 2.00 | 2.00 | 2.49 | 2.49 | 3.49 | 3.49 |
| $(R_2O + R'O)/(SiO_2 + B_2O_3 + Al_2O_3)$ | 0.0858 | 0.0858 | 0.0988 | 0.0988 | 0.0989 | 0.0988 |
| Meltability | A | A | A | A | A | A |
| Glass-transition point [°C] | 485 | 482 | 499 | 505 | 489 | 479 |

(continued)

| Table 3 | Example 15 | Example 16 | Example 17 | Example 18 | Example 19 | Example 20 |
|---|---|---|---|---|---|---|
| Average linear expansion coefficient ($\alpha_{100\text{-}300°C}$) [$\times 10^{-7}$/°C] | 55 | 50 | 46 | 52 | 49 | 52 |
| Internal transmittance at wavelength of 265 nm with glass thickness of 1 mm [%] | 91.6 | 91.8 | 92.1 | 92.4 | 92.9 | 92.5 |
| Weight loss [mass%] | 0.053 | 0.054 | 0.058 | 0.068 | 0.050 | 0.045 |

[Table 4]

| Table 4 | Comparative Example 1 | Comparative Example 2 | Comparative Example 3 | Comparative Example 4 | Comparative Example 5 | Comparative Example 6 | Comparative Example 7 |
|---|---|---|---|---|---|---|---|
| $SiO_2$ [mass%] | 58.94 | 54.95 | 65.80 | 46.98 | 59.97 | 64.47 | 37.50 |
| $B_2O_3$ [mass%] | 23.98 | 26.97 | 10.70 | 28.99 | 19.99 | 14.99 | 25.00 |
| $Al_2O_3$ [mass%] | 8.02 | 9.02 | 8.10 | 9.99 | 8.00 | 7.50 | 23.00 |
| $Li_2O$ [mass%] | | 1.00 | | 3.00 | 3.00 | 3.50 | 2.70 |
| $Na_2O$ [mass%] | 4.91 | 3.97 | 11.70 | 5.00 | 3.00 | 9.50 | 1.80 |
| $K_2O$ [mass%] | 2.00 | 2.00 | | 4.00 | 2.00 | | 9.90 |
| MgO [mass%] | | | | 2.00 | 1.00 | | |
| CaO [mass%] | | | 3.20 | | 1.00 | | |
| SrO [mass%] | | | | | | | |
| BaO [mass%] | | | | | 1.00 | | |
| $La_2O_3$ [mass%] | | | | | 1.00 | | |
| $Sb_2O_3$ [mass%] | | | | 0.05 | 0.05 | 0.05 | 0.10 |
| F [mass%] | 1.97 | 1.97 | 0.50 | | | | |
| Cl [mass%] | 0.18 | 0.12 | | | | | |
| Total [mass%] | 100.00 | 100.00 | 100.00 | 100.00 | 100.00 | 100.00 | 100.00 |
| $R_2O$ (= $Li_2O$ + $Na_2O$ + $K_2O$) [mass%] | 6.91 | 6.97 | 11.70 | 12.00 | 8.00 | 13.00 | 14.40 |
| R'O (= MgO + CaO + SrO + BaO) [mass%] | | | 3.20 | 2.00 | 3.00 | | |
| ($R_2O$ + R'O)/($SiO_2$ + $B_2O_3$ + $A_2O_3$) | 0.0760 | 0.0767 | 0.1761 | 0.1628 | 0.1250 | 0.1494 | 0.1684 |
| Meltability | B | B | B | A | B | A | A |
| Glass-transition point [°C] | 432 | 422 | 568 | 491 | 519 | 513 | 469 |
| Average linear expansion coefficient ($\alpha_{100\text{-}300°C}$) [$\times 10^{-7}$/°C] | 57 | 54 | 64 | 71 | 61 | 76 | 77 |
| Internal transmittance at wavelength of 265 nm with glass thickness of 1 mm [%] | 32.9 | 56.3 | 90.5 | 90.6 | 91.1 | 91.7 | 92.8 |
| Weight loss [mass%] | 0.022 | 0.034 | 0.013 | 0.036 | 0.024 | 0.009 | 0.036 |

14

EP 4 745 100 A1

[Table 5]

| Table 5 | Comparative Example 8 | Comparative Example 9 | Comparative Example 10 | Comparative Example 11 | Comparative Example 12 | Comparative Example 13 | Comparative Example 14 |
|---|---|---|---|---|---|---|---|
| $SiO_2$ [mass%] | 46.81 | 53.84 | 54.84 | 50.30 | 47.01 | 47.03 | 49.80 |
| $B_2O_3$ [mass%] | 35.16 | 34.90 | 29.91 | 27.39 | 31.57 | 31.07 | 31.87 |
| $Al_2O_3$ [mass%] | 8.98 | 2.01 | 6.00 | 12.96 | 12.07 | 12.76 | 8.98 |
| $Li_2O$ [mass%] | 2.99 | 2.99 | 2.99 | 2.99 | 2.99 | 1.01 | |
| $Na_2O$ [mass%] | 2.69 | 2.89 | 2.89 | 2.98 | 2.98 | 7.75 | 5.97 |
| $K_2O$ [mass%] | | | | | | | |
| MgO [mass%] | | | | | | | |
| CaO [mass%] | | | | | | | |
| SrO [mass%] | | | | | | | |
| BaO [mass%] | 2.99 | 2.99 | 2.99 | 2.99 | 2.99 | | 2.99 |
| $La_2O_3$ [mass%] | | | | | | | |
| $Sb_2O_3$ [mass%] | 0.05 | 0.05 | 0.05 | 0.05 | 0.05 | 0.05 | 0.05 |
| F [mass%] | 0.03 | 0.03 | 0.03 | 0.03 | 0.03 | 0.03 | 0.03 |
| Cl [mass%] | 0.30 | 0.30 | 0.30 | 0.30 | 0.30 | 0.30 | 0.30 |
| Total [mass%] | 100.00 | 99.99 | 100.00 | 100.00 | 100.00 | 100.00 | 100.00 |
| $R_2O$ (= $Li_2O$ + $Na_2O$ + $K_2O$) [mass%] | 5.68 | 5.88 | 5.88 | 5.97 | 5.97 | 8.76 | 5.97 |
| R'O (= MgO + CaO + SrO + BaO) [mass%] | 2.99 | 2.99 | 2.99 | 2.99 | 2.99 | | 2.99 |
| $(R_2O + R'O)/(SiO_2 + B_2O_3 + Al_2O_3)$ | 0.0953 | 0.0977 | 0.0977 | 0.0989 | 0.0989 | 0.0964 | 0.0989 |
| Meltability | A | B | A | B | B | B | B |
| Glass-transition point [°C] | 469 | 482 | 490 | 488 | 478 | 463 | 476 |
| Average linear expansion coefficient ($\alpha_{100\text{-}300°C}$) [$\times 10^{-7}$/°C] | 52 | 48 | 49 | 46 | 47 | 63 | 53 |
| Internal transmittance at wavelength of 265 nm with glass thickness of 1 mm [%] | 93.0 | 0.1 | 92.4 | 91.1 | 91.3 | 90.7 | 91.5 |
| Weight loss [mass%] | 0.110 | 0.357 | 0.106 | 0.018 | 0.031 | 0.039 | 0.059 |

[Table 6]

| Table 6 | Comparative Example 15 | Comparative Example 16 | Comparative Example 17 | Comparative Example 18 | Comparative Example 19 | Comparative Example 20 | Comparative Example 21 |
|---|---|---|---|---|---|---|---|
| $SiO_2$ [mass%] | 49.95 | 49.80 | 49.80 | 49.85 | 49.80 | 49.79 | 49.80 |
| $B_2O_3$ [mass%] | 31.97 | 31.87 | 33.86 | 31.90 | 31.87 | 31.87 | 31.87 |
| $Al_2O_3$ [mass%] | 9.01 | 8.98 | 8.98 | 8.99 | 8.98 | 8.98 | 8.98 |
| $Li_2O$ [mass%] | | 1.00 | 1.99 | 8.17 | 8.76 | 0.82 | 0.00 |
| $Na_2O$ [mass%] | 0.20 | 1.00 | 1.99 | 0.71 | 0.20 | 8.17 | 8.96 |
| $K_2O$ [mass%] | 5.49 | 5.98 | | | | | |
| MgO [mass%] | | | | | | | |
| CaO [mass%] | | | | | | | |
| SrO [mass%] | | | | | | | |
| BaO [mass%] | 3.00 | 1.00 | 2.99 | | | | |
| $La_2O_3$ [mass%] | | | | | | | |
| $Sb_2O_3$ [mass%] | 0.05 | 0.05 | 0.05 | 0.05 | 0.05 | 0.05 | 0.05 |
| F [mass%] | 0.03 | 0.03 | 0.03 | 0.03 | 0.03 | 0.03 | 0.03 |
| Cl [mass%] | 0.30 | 0.30 | 0.30 | 0.30 | 0.30 | 0.30 | 0.30 |
| Total [mass%] | 100.00 | 100.00 | 100.00 | 100.00 | 99.99 | 100.00 | 99.99 |
| $R_2O$ (= $Li_2O$ + $Na_2O$ + $K_2O$) [mass%] | 5.69 | 7.98 | 3.98 | 8.88 | 8.96 | 8.99 | 8.96 |
| R'O (= MgO + CaO + SrO + BaO) [mass%] | 3.00 | 1.00 | 2.99 | | | | |
| ($R_2O$ + R'O)/($SiO_2$ + $B_2O_3$ + $Al_2O_3$) | 0.0956 | 0.0990 | 0.0752 | 0.0979 | 0.0988 | 0.0992 | 0.0988 |
| Meltability | B | A | B | A | A | A | A |
| Glass-transition point [°C] | 474 | 470 | 465 | 510 | 508 | 466 | 467 |
| Average linear expansion coefficient ($\alpha_{100-300°C}$) [×$10^{-7}$/°C] | 53 | 62 | 47 | 61 | 65 | 62 | 64 |
| Internal transmittance at wavelength of 265 nm with glass thickness of 1 mm [%] | 39.3 | 88.7 | 91.3 | 93.1 | 93.4 | 92.7 | 92.4 |
| Weight loss [mass%] | 0.089 | 0.061 | 0.057 | 0.056 | 0.070 | 0.085 | 0.102 |

[Table 7]

| Table 7 | Comparative Example 22 | Comparative Example 23 | Comparative Example 24 | Comparative Example 25 |
|---|---|---|---|---|
| $SiO_2$ [mass%] | 49.75 | 49.75 | 49.80 | 49.80 |
| $B_2O_3$ [mass%] | 31.84 | 31.84 | 31.87 | 31.87 |
| $Al_2O_3$ [mass%] | 8.97 | 8.97 | 8.98 | 8.98 |
| $Li_2O$ [mass%] | 2.99 | 2.99 | 1.49 | 1.49 |
| $Na_2O$ [mass%] | 2.98 | 2.98 | 2.99 | 2.99 |
| $K_2O$ [mass%] | | | | |
| MgO [mass%] | 3.08 | | | |
| CaO [mass%] | | 3.08 | | |
| SrO [mass%] | | | 4.48 | |
| BaO [mass%] | | | | 4.48 |
| $La_2O_3$ [mass%] | | | | |
| $Sb_2O_3$ [mass%] | 0.05 | 0.05 | 0.05 | 0.05 |
| F [mass%] | 0.03 | 0.03 | 0.03 | 0.03 |
| Cl [mass%] | 0.30 | 0.30 | 0.30 | 0.30 |
| Total [mass%] | 100.00 | 100.00 | 100.00 | 100.00 |
| $R_2O$ (= $Li_2O$ + $Na_2O$ + $K_2O$) [mass%] | 5.97 | 5.97 | 4.48 | 4.48 |
| R'O (= MgO + CaO + SrO + BaO) [mass%] | 3.08 | 3.08 | 4.48 | 4.48 |
| $(R_2O + R'O)/(SiO_2 + B_2O_3 + Al_2O_3)$ | 0.0999 | 0.0999 | 0.0989 | 0.0988 |
| Meltability | B | B | B | B |
| Glass-transition point [°C] | 506 | 508 | 489 | 482 |
| Average linear expansion coefficient ($\alpha_{100\text{-}300°C}$) [$\times 10^{-7}$/°C] | 50 | 54 | 48 | 47 |
| Internal transmittance at wavelength of 265 nm with glass thickness of 1 mm [%] | 90.7 | 91.5 | 91.4 | 91.8 |
| Weight loss [mass%] | 0.052 | 0.049 | 0.047 | 0.049 |

[Table 8]

| Table 8 | Comparative Example 26 | Comparative Example 27 | Comparative Example 28 | Comparative Example 29 | Comparative Example 30 | Comparative Example 31 | Comparative Example 32 | Comparative Example 33 |
|---|---|---|---|---|---|---|---|---|
| $SiO_2$ [mass%] | 47.03 | 48.71 | 49.80 | 47.01 | 47.67 | 47.67 | 52.19 | 54.51 |
| $B_2O_3$ [mass%] | 35.02 | 31.81 | 31.87 | 31.88 | 32.46 | 32.45 | 27.34 | 28.77 |
| $Al_2O_3$ [mass%] | 8.50 | 8.97 | 7.99 | 10.97 | 9.15 | 9.14 | 10.95 | 7.02 |
| $Li_2O$ [mass%] | 1.12 | 5.96 | 1.99 | 1.99 | 3.04 | 3.04 | 2.98 | 2.98 |
| $Na_2O$ [mass%] | 7.95 | 2.98 | 1.99 | 3.98 | 5.78 | 5.78 | 6.16 | 3.37 |
| $K_2O$ [mass%] | | | 4.98 | 2.99 | | | | |
| MgO [mass%] | | | | | 1.52 | | | |
| CaO [mass%] | | | | | | 1.52 | | |
| SrO [mass%] | | | | | | | | |
| BaO [mass%] | | 1.19 | 1.00 | 0.80 | | | | 2.97 |
| $La_2O_3$ [mass%] | | | | | | | | |
| $Sb_2O_3$ [mass%] | 0.05 | 0.05 | 0.05 | 0.05 | 0.05 | 0.05 | 0.05 | 0.05 |
| F [mass%] | 0.03 | 0.03 | 0.03 | 0.03 | 0.03 | 0.03 | 0.03 | 0.03 |
| Cl [mass%] | 0.30 | 0.30 | 0.30 | 0.30 | 0.30 | 0.30 | 0.30 | 0.30 |
| Total [mass%] | 100.00 | 100.00 | 100.00 | 100.00 | 100.00 | 99.99 | 100.00 | 100.00 |
| $R_2O$ (= $Li_2O$ + $Na_2O$ + $K_2O$) [mass%] | 9.07 | 8.94 | 8.96 | 8.96 | 8.82 | 8.82 | 9.14 | 6.35 |
| R'O (= MgO + CaO + SrO + BaO) [mass%] | | 1.19 | 1.00 | 0.80 | 1.52 | 1.52 | | 2.97 |
| ($R_2O$ + R'O)/($SiO_2$ + $B_2O_3$ + $Al_2O_3$) | 0.1002 | 0.1132 | 0.1111 | 0.1086 | 0.1158 | 0.1159 | 0.1010 | 0.1033 |
| Meltability | A | A | A | A | A | A | A | A |
| Glass-transition point [°C] | 457 | 500 | 457 | 458 | 486 | 494 | 485 | 490 |
| Average linear expansion coefficient ($\alpha_{100\text{-}300°C}$) [$\times 10^{-7}$/°C] | 64 | 61 | 61 | 63 | 61 | 62 | 61 | 48 |

EP 4 745 100 A1

(continued)

| Table 8 | Comparative Example 26 | Comparative Example 27 | Comparative Example 28 | Comparative Example 29 | Comparative Example 30 | Comparative Example 31 | Comparative Example 32 | **Comparative** Example 33 |
|---|---|---|---|---|---|---|---|---|
| Internal transmittance at wavelength of 265 nm with glass thickness of 1 mm [%] | 93.1 | 93.4 | 92.5 | 92.8 | 92.3 | 92.6 | 92.5 | 92.4 |
| Weight loss [mass%] | 0.101 | 0.053 | 0.075 | 0.051 | 0.064 | 0.075 | 0.015 | 0.106 |

It can be seen from Tables 1 to 3 that the glasses of Examples 1 to 20, which are in accordance with the present disclosure, had an evaluation result of "A" for meltability, an average linear expansion coefficient ($\alpha_{100\text{-}300°C}$) of 60 $\times$ $10^{-7}$/°C or less, a weight loss of less than 0.10 mass%, and an internal transmittance of 90% or more at a wavelength of 265 nm with a glass thickness of 1 mm. These results demonstrate that the glasses of Examples 1 to 20 have good meltability, low thermal expansion, excellent water resistance, and excellent UV-C transmission.

Moreover, the glasses of Examples 1 to 20 had a glass-transition point of 510°C or lower. This demonstrates that the glasses of Examples 1 to 20 are also advantageous in molding.

In contrast, it can be seen from Tables 4 to 8 that the glasses of Comparative Examples 1 to 33 are glasses that have poor meltability, high thermal expansion, and/or poor water resistance as a result of not satisfying any one of the ranges stipulated in the present disclosure.

The glass of Comparative Example 1 had an evaluation result of "B" for meltability. This may be due to high content of $SiO_2$ and low content of $B_2O_3$.

The glass of Comparative Example 2 had an evaluation result of "B" for meltability. This may be due to low content of $B_2O_3$.

Moreover, the glasses of Comparative Examples 1 and 2 had a low internal transmittance [%] at a wavelength of 265 nm with a glass thickness of 1 mm. This may be due to the glasses of Comparative Examples 1 and 2 having poor meltability and unmelted matter and bubbles remaining in the glass.

The glass of Comparative Example 3 had an evaluation result of "B" for meltability and had a high average linear expansion coefficient ($\alpha_{100\text{-}300°C}$). Moreover, the glass of Comparative Example 3 had a high glass-transition point. These results may be due to high content of $SiO_2$ and $Na_2O$ and the mass ratio expressed by $(R_2O + R'O)/(SiO_2 + B_2O_3 + Al_2O_3)$ being 0.1 or more.

The glass of Comparative Example 4 had a high average linear expansion coefficient ($\alpha_{100\text{-}300°C}$). This may be due to the mass ratio expressed by $(R_2O + R'O)/(SiO_2 + B_2O_3 + Al_2O_3)$ being 0.1 or more.

The glass of Comparative Example 5 had an evaluation result of "B" for meltability and had a high average linear expansion coefficient ($\alpha_{100\text{-}300°C}$). Moreover, the glass of Comparative Example 5 had a high glass-transition point. These results may be due to high content of $SiO_2$ and the mass ratio expressed by $(R_2O + R'O)/(SiO_2 + B_2O_3 + Al_2O_3)$ being 0.1 or more.

The glasses of Comparative Examples 6 and 7 had a high average linear expansion coefficient ($\alpha_{100\text{-}300°C}$). This may be due to the mass ratio expressed by $(R_2O + R'O)/(SiO_2 + B_2O_3 + Al_2O_3)$ being 0.1 or more.

The glasses of Comparative Examples 8 to 25 are each a glass for which the mass ratio expressed by $(R_2O + R'O)/(SiO_2 + B_2O_3 + Al_2O_3)$ is less than 0.1 but in which the content of any one of the components in the glass does not satisfy the range for that component in the composition requirement.

The glass of Comparative Example 8 had a large weight loss. This may be due to low content of $SiO_2$ and high content of $B_2O_3$.

The glass of Comparative Example 9 had a particularly large weight loss. Moreover, the glass of Comparative Example 9 underwent phase separation and had an internal transmittance [%] of almost 0 at a wavelength of 265 nm with a glass thickness of 1 mm. These results may be due to the content of $Al_2O_3$ being too low.

The glass of Comparative Example 10 had a large weight loss. This may be due to low content of $Al_2O_3$.

The glasses of Comparative Examples 11 to 13 had an evaluation result of "B" for meltability. This may be due to high content of $Al_2O_3$.

The glass of Comparative Example 14 had an evaluation result of "B" for meltability. This may be due to the glass of Comparative Example 14 not containing $Li_2O$.

The glass of Comparative Example 15 had an evaluation result of "B" for meltability. This may be due to the glass of Comparative Example 15 not containing $Li_2O$ and having a low content of $Na_2O$.

Moreover, the glass of Comparative Example 15 had a low internal transmittance [%] at a wavelength of 265 nm with a glass thickness of 1 mm. This may be due to the glass of Comparative Example 15 having poor meltability and unmelted matter and bubbles remaining in the glass.

The glass of Comparative Example 16 had a high average linear expansion coefficient ($\alpha_{100\text{-}300°C}$). This may be due to high content of $K_2O$.

The glass of Comparative Example 17 had an evaluation result of "B" for meltability. This may be due to low content of $R_2O$.

The glasses of Comparative Examples 18 and 19 had a high average linear expansion coefficient ($\alpha_{100\text{-}300°C}$). This may be due to high content of $Li_2O$ and low content of $Na_2O$.

The glass of Comparative Example 20 had a high average linear expansion coefficient ($\alpha_{100\text{-}300°C}$). This may be due to low content of $Li_2O$ and high content of $Na_2O$.

The glass of Comparative Example 21 had a high average linear expansion coefficient ($\alpha_{100\text{-}300°C}$) and a large weight loss. These results may be due to $Li_2O$ not being included and high content of $Na_2O$.

The glass of Comparative Example 22 had an evaluation result of "B" for meltability. This may be due to high content of MgO.

The glass of Comparative Example 23 had an evaluation result of "B" for meltability. This may be due to high content of CaO.

The glass of Comparative Example 24 had an evaluation result of "B" for meltability. This may be due to high content of SrO.

The glass of Comparative Example 25 had an evaluation result of "B" for meltability. This may be due to high content of BaO.

The glass of Comparative Example 26 had a high average linear expansion coefficient ($\alpha_{100\text{-}300°C}$) and a large weight loss. This may be due to high content of $R_2O$ and the mass ratio expressed by $(R_2O + R'O)/(SiO_2 + B_2O_3 + Al_2O_3)$ being 0.1 or more.

The glass of Comparative Example 32 had a high average linear expansion coefficient ($\alpha_{100\text{-}300°C}$). This may be due to high content of $R_2O$ and the mass ratio expressed by $(R_2O + R'O)/(SiO_2 + B_2O_3 + Al_2O_3)$ being 0.1 or more.

Comparative Examples 27 to 31 and 33 are glasses that satisfy the composition requirement but have a mass ratio expressed by $(R_2O + R'O)/(SiO_2 + B_2O_3 + Al_2O_3)$ that is 0.1 or more. The glasses of Comparative Examples 27 to 31 each had a high average linear expansion coefficient ($\alpha_{100\text{-}300°C}$). Moreover, the glass of Comparative Example 33 had a large weight loss. These results demonstrate that even when the composition requirement is satisfied, it is not possible to achieve a balance of both low thermal expansion and excellent water resistance when the mass ratio expressed by $(R_2O + R'O)/(SiO_2 + B_2O_3 + Al_2O_3)$ is 0.1 or more.

INDUSTRIAL APPLICABILITY

According to the present disclosure, it is possible to provide a UV-C transmitting glass having good meltability, low thermal expansion, and excellent water resistance with a specific composition of aluminoborosilicate glass.

Moreover, according to the present disclosure, it is possible to provide a glass component in which the aforementioned UV-C transmitting glass is used.

**Claims**

1. A UV-C transmitting glass comprising, by mass%:

not less than 46.90% and less than 55.00% of $SiO_2$;
more than 27.00% and not more than 35.10% of $B_2O_3$;
not less than 6.90% and not more than 12.00% of $Al_2O_3$;
not less than 0.90% and not more than 8.00% of $Li_2O$;
not less than 0.90% and not more than 8.10% of $Na_2O$;
not less than 0% and not more than 5.10% of $K_2O$;
not less than 4.00% and less than 9.00% of $R_2O$, where $R_2O$ indicates a total of $Li_2O$, $Na_2O$, and $K_2O$;
not less than 0% and not more than 3.00% of MgO;
not less than 0% and not more than 3.00% of CaO;
not less than 0% and not more than 4.00% of SrO;
not less than 0% and not more than 4.00% of BaO;
not less than 0% and less than 5.00% of R'O, where R'O indicates a total of MgO, CaO, SrO, and BaO;
not less than 0% and not more than 1.00% of $Sb_2O_3$;
more than 0.01% and not more than 1.00% of F; and
not less than 0.05% and not more than 1.00% of Cl, wherein
a mass ratio expressed by $(R_2O + R'O)/(SiO_2 + B_2O_3 + Al_2O_3)$ is less than 0.1.

2. The UV-C transmitting glass according to claim 1, having an average linear expansion coefficient ($\alpha_{100\text{-}300°C}$) of not less than $45 \times 10^{-7}/°C$ and not more than $60 \times 10^{-7}/°C$.

3. The UV-C transmitting glass according to claim 1 or 2, having an internal transmittance of 90% or more at a wavelength of 265 nm with a glass thickness of 1 mm.

4. The UV-C transmitting glass according to claim 1 or 2, having a glass-transition point of 510°C or lower.

5. The UV-C transmitting glass according to claim 1 or 2, wherein in a situation in which a 20 mm × 10 mm × 10 mm glass piece of the UV-C transmitting glass is subjected to 60 minutes of boiling treatment in 1,000 mL of pure water, weight loss between before and after the boiling treatment is less than 0.1 mass%.

6. The UV-C transmitting glass according to claim 1 or 2, wherein the UV-C transmitting glass is for precision press molding.

7. A glass component obtained using the UV-C transmitting glass according to claim 1 or 2 as a material.

| INTERNATIONAL SEARCH REPORT | International application No. |
|---|---|
| | PCT/JP2025/030986 |

**A. CLASSIFICATION OF SUBJECT MATTER**

***C03C 3/118***(2006.01)i
FI: C03C3/118

According to International Patent Classification (IPC) or to both national classification and IPC

**B. FIELDS SEARCHED**

Minimum documentation searched (classification system followed by classification symbols)

C03C3/118, C03C4/00

Documentation searched other than minimum documentation to the extent that such documents are included in the fields searched

Published examined utility model applications of Japan 1922-1996
Published unexamined utility model applications of Japan 1971-2025
Registered utility model specifications of Japan 1996-2025
Published registered utility model applications of Japan 1994-2025

Electronic data base consulted during the international search (name of data base and, where practicable, search terms used)

INTERGLAD

**C. DOCUMENTS CONSIDERED TO BE RELEVANT**

| Category* | Citation of document, with indication, where appropriate, of the relevant passages | Relevant to claim No. |
|---|---|---|
| A | JP 2-141438 A (ZEISS CARL FA) 30 May 1990 (1990-05-30)<br>claims, tables 1, 2 | 1-7 |
| A | JP 2015-193521 A (NIPPON ELECTRIC GLASS CO.) 05 November 2015 (2015-11-05)<br>claims, table 1 | 1-7 |
| A | WO 2016/194780 A1 (ASAHI GLASS COMPANY, LIMITED) 08 December 2016<br>(2016-12-08)<br>claims, tables 1-4 | 1-7 |
| A | JP 60-77144 A (HOYA CORP.) 01 May 1985 (1985-05-01)<br>claims, tables | 1-7 |
| A | US 2022/0388893 A1 (NIPPON ELECTRIC GLASS CO., LTD.) 08 December 2022<br>(2022-12-08)<br>claims, tables 1, 2 | 1-7 |

☐ Further documents are listed in the continuation of Box C.    ☑ See patent family annex.

| * Special categories of cited documents: | "T" later document published after the international filing date or priority date and not in conflict with the application but cited to understand the principle or theory underlying the invention |
|---|---|
| "A" document defining the general state of the art which is not considered to be of particular relevance | |
| "D" document cited by the applicant in the international application | "X" document of particular relevance; the claimed invention cannot be considered novel or cannot be considered to involve an inventive step when the document is taken alone |
| "E" earlier application or patent but published on or after the international filing date | |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
|---|---|
| **14 October 2025** | **28 October 2025** |

| Name and mailing address of the ISA/JP | Authorized officer |
|---|---|
| **Japan Patent Office (ISA/JP)**<br>**3-4-3 Kasumigaseki, Chiyoda-ku, Tokyo 100-8915**<br>**Japan** | |
| | Telephone No. |

Form PCT/ISA/210 (second sheet) (July 2022)

**TRANSLATION**

**INTERNATIONAL SEARCH REPORT**
Information on patent family members

International application No.

**PCT/JP2025/030986**

| Patent document cited in search report | | | Publication date (day/month/year) | Patent family member(s) | | | Publication date (day/month/year) |
|---|---|---|---|---|---|---|---|
| JP | 2-141438 | A | 30 May 1990 | US | 5045509 | A | |
| | | | | claims, tables 1, 2 | | | |
| JP | 2015-193521 | A | 05 November 2015 | (Family: none) | | | |
| WO | 2016/194780 | A1 | 08 December 2016 | US | 2018/0057393 | A1 | |
| | | | | claims, tables 1-4 | | | |
| JP | 60-77144 | A | 01 May 1985 | (Family: none) | | | |
| US | 2022/0388893 | A1 | 08 December 2022 | (Family: none) | | | |

Form PCT/ISA/210 (patent family annex) (July 2022)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- JP H4342437 A
- JP 2018197190 A
- JP 2012140314 A
- JP 2013230952 A

### Non-patent literature cited in the description

- *Minamata Convention on Mercury*, 2013
- Measuring method for thermal expansion of optical glass. *JOGIS 08-2019*
- Measuring method for internal transmittance of optical glass. *JOGIS 17-2019*